# EUROPÄISCHE PATENTSCHRIFT

(11) **EP 1 184 590 B1**
(45) Veröffentlichungstag und Bekanntmachung des Hinweises auf die Patenterteilung: **30.11.2005**
(21) Anmeldenummer: 01114315.3
(22) Anmeldetag: 13.06.2001
(51) Int. Cl.: F16F 15/34

(54) **Verfahren und Einrichtung zum Auswuchten von rotierenden Körpern**
Procedure and apparatus for balancing a rotating body
Procédé et dispositif d'équilibrage d'un corps tournant

(30) Priorität: 10.08.2000 DE 10039865
(43) Veröffentlichungstag der Anmeldung: 06.03.2002
(73) Patentinhaber: Heidelberger Druckmaschinen Aktiengesellschaft, 69115 Heidelberg (DE)
(72) Erfinder: Paasch, Burkhard, 24211 Wahlstorf (DE); Siebolds, Heinz, 24107 Kiel (DE)

(56) Entgegenhaltungen:
- FR-A- 2 630 496
- US-A- 2 895 766
- US-A- 5 813 346
- PATENT ABSTRACTS OF JAPAN vol. 2000, no. 07, 29. September 2000 (2000-09-29) -& JP 2000 112141 A (DAINIPPON SCREEN MFG CO LTD), 21. April 2000 (2000-04-21)
- PATENT ABSTRACTS OF JAPAN vol. 2000, no. 02, 29. Februar 2000 (2000-02-29) & JP 11 311863 A (DAINIPPON SCREEN MFG CO LTD), 9. November 1999 (1999-11-09)

## Beschreibung

Die Erfindung betrifft ein Verfahren zum Auswuchten von rotierenden Körpern, insbesondere zum Auswuchten der Trommel eines Reproduktionsgerätes, vorzugsweise eines Druckplattenbelichters, bei dem wenigstens ein Massenelement entlang eines vorgegebenen Bewegungsweges, vorzugsweise eines zur Rotationsachse des rotierenden Körpers in gleichbleibendem radialen Abstand verlaufenden Bewegungsweges, umpositioniert wird.

Des weiteren betrifft die Erfindung eine Einrichtung zum Auswuchten von rotierenden Körpern, vorzugsweise zur Durchführung des vorgenannten Verfahrens.

Ein Verfahren der oben genannten Gattung und eine dafür vorgesehene Einrichtung sind aus der US 5 813 346 A bekannt.

In der genannten Schrift geht es darum, daß insbesondere die Trommel eines Druckplattenbelichters mit Hilfe von Massenelementen ausgewuchtet werden muß, bevor sie in Rotation für das Belichten bzw. Beschreiben der neu aufgespannten Druckplatte versetzt wird, um durch das Eigengewicht der Druckplatte und dessen die Trommel nicht immer vollständig umschließende Verteilung entstandene Unwuchten zu kompensieren. Es können auch mehrere Druckplatten auf eine Trommel aufgebracht werden. Zu dieser Problematik schlägt das zitierte Dokument vor, Ausgleichs-Massenelemente nach Bedarf entlang eines vorgegebenen Bewegungsweges zu verschieben und auf diese Weise, die Massenelemente neu zu verteilen. Dazu sollen die Massenelemente zwar verschiebbar sein, aber dennoch durch reine Reibungskraft in ihren jeweiligen, gewählten Auswuchtungspositionen fixierbar sein.

In der US 2,895,766 wird eine Auswuchtungseinrichtung für die Anwendung in einem Autorad beschrieben, bei der Auswuchtelemente in einer konzentrischen Laufnut frei bewegbar sind, sobald die Drehzahl des Rads eine kritische Drehzahl überschreitet. Die Auswuchtelemente bewegen sich dann selbständig auf Winkelpositionen, bei denen eine Unwucht des Rades kompensiert wird. Wenn die Drehzahl anschließend wieder unter die kritische Drehzahl fällt, rasten die Auswuchtelemente durch Formschluss in den zuvor erreichten Winkelpositionen ein, wodurch der Unwuchtausgleich auch bei geringen Drehzahlen erhalten bleibt. Die Auswuchtelemente bestehen aus zwei Teilen, die mit einer Druckfeder auseinander gedrückt werden, so dass sie bei geringen Drehzahlen in Formschlusselemente, die in der Laufnut angebracht sind, einrasten können. Bei hoher Drehzahl werden die Teile der Auswuchtelemente durch die Fliehkraft zusammen gedrückt, so dass sie aus den Formschlusselementen ausrücken und sich frei in der Laufnut bewegen können.

In der FR 2630496 wird eine Unwuchtkorrektureinrichtung für einen Turbinenrotor beschrieben. Auswuchtelemente, die aus zwei Teilen bestehen und in einer konzentrischen Nut angeordnet sind, können mittels eines Betätigungsstempels aus einer Einrastung ausgerückt werden und durch Drehen des Rotors manuell an eine gewünschte Stelle verschoben werden, wo sie wieder eingerastet werden.

Der Erfindung liegt die Aufgabe zugrunde, bei ebenfalls einfacher Umpositionierbarkeit der Massenelemente, die Fixierung der Massenelemente im Hinblick auf Zuverlässigkeit und Sicherheit zu verbessern.

Diese Aufgabe wird erfindungsgemäß in Verfahrenhinsicht dadurch gelöst, daß das jeweilige Massenelement in unterschiedlichen Auswuchtungspositionen mittels Formschlusses fixiert wird und durch eine Erfassungsvorrichtung aus dem vorhandenen Formschluss genommen wird, entlang des Bewegungsweges in eine andere Auswuchtposition bewegt wird und dort ein Formschluss wieder hergestellt wird, in dem eine radiale Bewegung des Massenelement durch ein sich in axialer Richtung bewegendes Erfassungsorgan verwirklicht wird.

Die dazu notwendigen Bewegungen sollen vorzugsweise mit möglichst wenigen und sparsamen Bewegungskomponenten möglich sein. Insbesondere kann die Bewegung entlang des vorzugsweise auf einer Kreisbahn um die Rotationsachse verlaufenden Bewegungsweges durch die Drehung des rotierenden Körpers um seine Rotationsachse erfolgen, indem die bspw. stationär angeordnete Erfassungseinrichtung das jeweilige Massenelement erfaßt und stationär festhält, während sich der Körper in der einen oder in der anderen Drehrichtung darunter hinweg dreht. Bei einem geschlossenen Bewegungsweg ist sogar nur eine Drehrichtung erforderlich.

Auch wenn, wie bevorzugt vorgesehen, das Massenelement zur Unterstützung durch die Fliehkraft in radialer Richtung in einen Formschluß eingerückt und ebenfalls in radialer Richtung wieder ausgerückt werden soll, ist eine solche Bewegung, vorichtungsmäßig einfacher, durch ein sich in axialer Richtung bewegendes Erfassungsorgan verwirklichbar, indem wie nach einer Weiterbildung der erfindungsgemäßen Vorrichtung vorgesehen, das Erfassungsorgan und das Massenelement zusammenwirkende Schrägflächen aufweisen, die eine axiale Bewegung in eine radiale Bewegung umzusetzen in der Lage sind.

Dabei kann das Erfassungsorgan bspw. in einer besonders einfachen und zweckdienlichen Ausführungsform ein Stift oder ein Dorn sein, der achsparallel zur Rotationsachse angeordnet ist und dem eine Bohrung oder ein Sackloch des Massenelementes zu seiner Einführung zugeordnet ist. Das Erfassungsorgan und das Massenelement sind dann vorzugsweise mit einem radialen Versatz zueinander angeordnet, der kleiner ist als der Halbmesser des nicht unbedingt runden Sackloches des Massenelementes, so daß der Dorn bei einer Axialbewegung den offenen Querschnitt des Sackloches trifft und durch die zusammenwirkenden Schrägflächen der Versatz bei tieferem Eindringen des Dornes beseitigt wird, indem das Sackloch, und damit das Massenelement in eine radiale Bewegung gezwungen wird und dadurch aus einem Formschluß ausrückt. Bei Herausziehen des Dornes aus dem Sackloch wird das Massenelement wieder, vorzugsweise unter Einwirkung einer Federkraft in einen Formschluß eingerückt und dabei der radiale Versatz zwischen dem Sackloch und dem Dorn wieder hergestellt. Bei runder Ausbildung des Dornes und des Sackloches können die Schrägflächen dieser beiden Elemente als Konen ausgebildet sein.

Eine Umsetzung einer Axialbewegung in eine dazu senkrechte, insbesondere radiale Bewegungskomponente ist bspw. auch alternativ dadurch möglich, daß das Massenelement oder ein Teilbereich davon durch Einführung eines Elementes gespreizt und durch Entnahme dieses Elementes wieder entspreizt wird. Auch dadurch ist ein Einbringen in einen Formschluß und ein Ausbringen aus diesem Formschluß möglich.

Erfindungsgemäß wird also dem Formschluß gegenüber einem Reibschluß der Vorzug bei der Fixierung des Massenelementes gegeben. Für eine solche Fixierung werden erfindungsgemäß die notwendigen Gegebenheiten für eine ausreichende Anzahl von wählbaren Auswuchtungspositionen vorgegeben. In der Praxis werden in der Regel zwei Massenelemente pro Ende des rotierenden Körpers zum Ausgleich von Unwuchten notwendig und ausreichend sein, weil dadurch durch Unwuchten auftretende Momente insgesamt kompensiert werden können, also sowohl ein unrunder Lauf um die Rotationsachse als auch eine Torkelbewegung der Rotationsachse in ihren Lagern.

Damit trotz des Formschlusses des Massenelementes eine einfache Verschiebbarkeit des Massenelementes in eine andere Position möglich ist, ist nach der Erfindung vorgesehen, daß das Massenelement für eine Weiterbewegung nur aus einem Formschlußeingriff ausrückt und später wieder in einen neuen Formschlußeingriff eingerückt werden muß.

Dabei erfolgt die Einrückung in radialer Richtung, und zwar bevorzugt in Richtung der Fliehkraft, damit diese den Eingriff verstärkt und nicht etwa schwächt. Zusätzlich kann das Massenelement unter einer Belastung, insbesondere einer Federbelastung, in Einrückrichtung stehen.

Nach einer weiteren Weiterbildung der Erfindung ist trotz des gewünschten Formschlusses in den jeweiligen Auswuchtungspositionen eine quasikontinuierliche Umpositionierung des Massenelementes möglich, indem für den Formschluß ein entlang des Bewegungsweges verlaufendes Raster bereitgestellt wird, dessen Rasterschritte für eine größere Anzahl von Auswuchtungspositionen entsprechend kleiner gewählt werden können. Dies kann gegenständlich bspw. durch eine Rasterung geschehen, die als Zahnung oder Rändelung ausgebildet ist.

Eine erfindungsgemäße Einrichtung zum Auswuchten von rotierenden Körpern gemäß der eingangs genannten Gattung, vorzugsweise zur Durchführung des erfindungsgemäßen Verfahrens, zeichnet sich in selbständiger Lösung der gestellten Aufgabe dadurch aus, daß das Massenelement in unterschiedlichen Auswuchtungspositionen mittels Formschlusses fixierbar ist. Daraus ergeben sich die schon beim erfindungsgemäßen Verfahren geschilderten Vorteile.

Insbesondere ist nach der erfindungsgemäßen Einrichtung vorgesehen, daß das Massenelement für eine Fortbewegung entlang des Bewegungsweges nur aus einer Auswuchtungsposition ausgerückt und später wieder in der neuen Auswuchtungsposition eingerückt werden muß, vorzugsweise unter Mitwirkung einer Federbelastung, die wie das Einrücken bevorzugt radial und in Richtung der Fliehkraft gerichtet ist.

Auf diese geschilderte Weise verstärkt die Fliehkraft den Formschluß.

Eine nächste Weiterbildung der Erfindung sieht vor, daß das oder jedes Massenelement reibungsvermindernd mit wenigstens einem Rollelement ausgestattet ist. Dies kann unmittelbar geschehen, jedoch auch mittelbar, indem bspw. ein Federelement, das eine Belastung in Einrückrichtung ausübt, z. B. eine Blattfeder, eine Schenkelfeder oder dergleichen, auf Rollen oder Topfrollen gelagert ist. Auch eine (zusätzliche) Rollagerung in axialer Richtung kann von Vorteil sein.

Um eine möglichst lückenlose, gleichmäßige und sozusagen quasikontinuierliche Fixierung des Massenelementes bzw. der Massenelemente entlang des Bewegungsweges zu ermöglichen und so eine feinjustierte, vorberechenbare Auswuchtung erzielen zu können, ist erfindungsgemäß bevorzugt vorgesehen, daß Formschlußelemente für das Massenelement eine entlang des Bewegungsweges verlaufende, gleichmäßige Rasterung bilden. Diese kann eine Zahnung oder eine Rändelung sein, die mit einem einfachen Werkzeug und schnell an geeigneter Stelle und auf der vorgesehenen Strecke in den verwendeten Werkstoff eingebracht werden kann. Auf diese Weise ist auch ohne größeren Aufwand eine Nachrüstung bestehender Einrichtungen möglich. Dabei können die für die Verwirklichung der Erfindung vorgesehenen Maßnahmen in bereits vorhandenen Bereichen bereitgestellt werden oder bspw. auch im Bereich von hinzuzufügenden Scheibenelementen oder dergleichen vorgefertigt werden, also insgesamt im Rahmen einer prinzipiell betriebsbereiten Nachrüsteinheit ergänzt werden.

Bei Verwendung einer Zahnung als Formschlußraster für das Massenelement oder die Massenelemente, vorzugsweise an einem Außenkranz mit radial einwärts gerichteter Zahnung, muß der Formschluß nur durch den Verzahnungswinkel und/ oder der Verzahnungshöhe sicherstellen, daß sich das Massenelement auch bei einer Rotation des rotierenden Körpers nicht selbsttätig wieder verschiebt. Dabei ist bei diesem Beispiel einer Ausführungsform der Erfindung zunächst einmal nur die geschilderte radiale Führung und Lagerung des Massenelementes bezüglich des Formschlusses notwendig.

Der Bewegungsweg ist insbesondere durch die Vorgabe einer Rasterung als Führungsbahn für das Massenelement ausgebildet, wobei ein Formschluß und eine Fixierung nicht unbedingt in radialer Richtung zur Rotationsachse ausgerichtet sein muß, wenngleich natürlich die bei der Rotation wirkende Fliehkraft in jedem Fall aufgefangen werden muß. Dies ist aber grundsätzlich auch immer durch geeignete Maßnahmen möglich. Bevorzugt wird aber erfindungsgemäß eine rein mechanische Lösung, die vorrichtungsmäßig einfacher erstellt und betätigt werden kann, insbesondere unter Berücksichtigung bestehender Einrichtungen und Mimiken bspw. im Bereich eines Druckplattenbelichters, und somit im Hinblick auf eine kostengünstige und schnelle Nachrüstung.

In diesem Sinne sieht eine nächste Weiterbildung der Erfindung vor, daß die Führungsbahn für die Massenelemente als Schlitzschiene oder als Führungsnut ausgebildet ist, beispielsweise mit einem zu seinem Fuß hin offenen T-Querschnitt oder mit einem L-Querschnitt. Auf diese Weise erfolgt eine axiale Lagesicherung jedes Massenelementes zusätzlich formschlüssig durch diese Querschnittsform. Ohne einen solchen Formschluß könnte, wie bereits erwähnt, zur axialen Sicherung des Massenelementes auch punktuell mit Magneten oder dergleichen Anhaftungselementen gearbeitet werden.

Ein Ausführungsbeispiel, aus dem sich auch weitere erfinderische Merkmale oder erfindungsgemäße Vorteile ergeben ist aus der Zeichnung entnehmbar. Es zeigen:
Fig. 1 eine perspektivische Explosionsdarstellung eines Stirnendbereiches eines rotierenden Körpers mit einer erfindungsgemäßen Einrichtung,
Fig.2 eine Stirnansicht des Stirnendes gemäß Fig. 1 und
Fig. 3 eine Schnittansicht des Stirnendbereiches gemäß Fig.1.

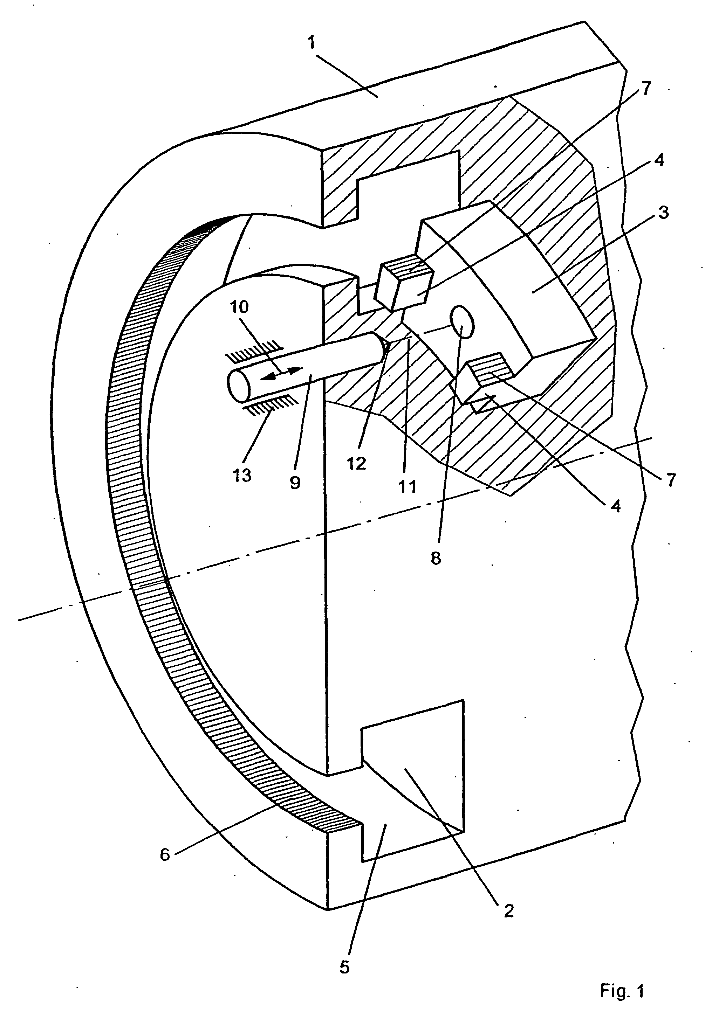

Fig. 1 zeigt einen Stirnendabschnitt eines walzenförmigen, rotierenden Körpers 1, z. B. einer Trommel eines Druckplattenbelichters, in einer perspektivischen Explosionsdarstellung.

Bei dem nur schematisch dargestellten Ausführungsbeispiel ist in die Stirnseite des Körpers 1 eine T-Nut 2 eingearbeitet, die als Führungsschiene für ein Massenelement 3 oder Massenelemente dient, die in diese T-Nut 2 eingeführt und entlang dieser T-Nut 2 verschoben werden können, um als Ausgleichsgewichte zur Beseitigung von Unwuchten des Körpers 1 bei Rotationen um seine Längsachse dienen zu können. Die T-Nut 2 oder eine ähnliche Führungsbahn könnte auch statt dessen Bestandteil einer separaten Scheibe sein, die stirnseitig an den Körper ansetzbar ist, was fertigungstechnisch günstiger sein könnte.

Das Massenelement 3 weist Führungsansätze 4 auf, die in und entlang der als Führungsschlitz dienenden Schlitzöffnung 5 der T-Nut 2 geführt werden. An seiner bezüglich der Längsachse bzw. Rotationsachse des Körpers 1 radial äußeren Seite weist die Schlitzöffnung 5 eine Rändelung oder einen Zahnkranz mit einer nur angedeuteten Zahnung 6 auf, die als sich entlang der T-Nut 2 erstreckende Formschlußelemente für das Massenelement 3, spezieller für die Führungsansätze 4 des Massenelementes 3, die über entsprechende, passende Zahnungen 7 verfügen, dient.

Das Massenelement 3 beinhaltet zudem ein Sackloch 8, in das ein Dorn 9 einer stationär außerhalb des Körpers angeordneten Erfassungseinrichtung, die in der Zeichnung nicht näher dargestellt ist, einführbar ist, wobei der Dorn 9 in Richtung eines Doppelpfeiles 10 achsparallel zur Längsachse des Körpers 1 hin- und herbewegbar ist. Dabei zielt der Dorn 9 in Richtung einer gestrichelt angedeuteten Linie 11 in das Sackloch 8. An seinem freien Ende weist der Dorn 9 einen Konus 12 auf, der mit einem passenden Konus am Boden des Sackloches 8 zusammenwirkt, um bei Einführung des Dornes 9 in das Sackloch 8 diesem bzw. dem Massenelement 3 eine radial einwärts gerichtete Bewegung zu erteilen. Dabei ist der Dorn selbst in der stationären Erfassungseinrichtung nur entlang des Doppelpfeiles 10 bewegbar gelagert, was durch eine entsprechende Lagerbohrung bzw. ein Lagerfutter 13 angedeutet ist. Für die Bewegung des Dornes 9 in Richtung des Doppelpfeiles 10 ist ein geeigneter Antrieb vorgesehen, der ebenfalls in der Zeichnung der Übersicht halber nicht dargestellt ist.

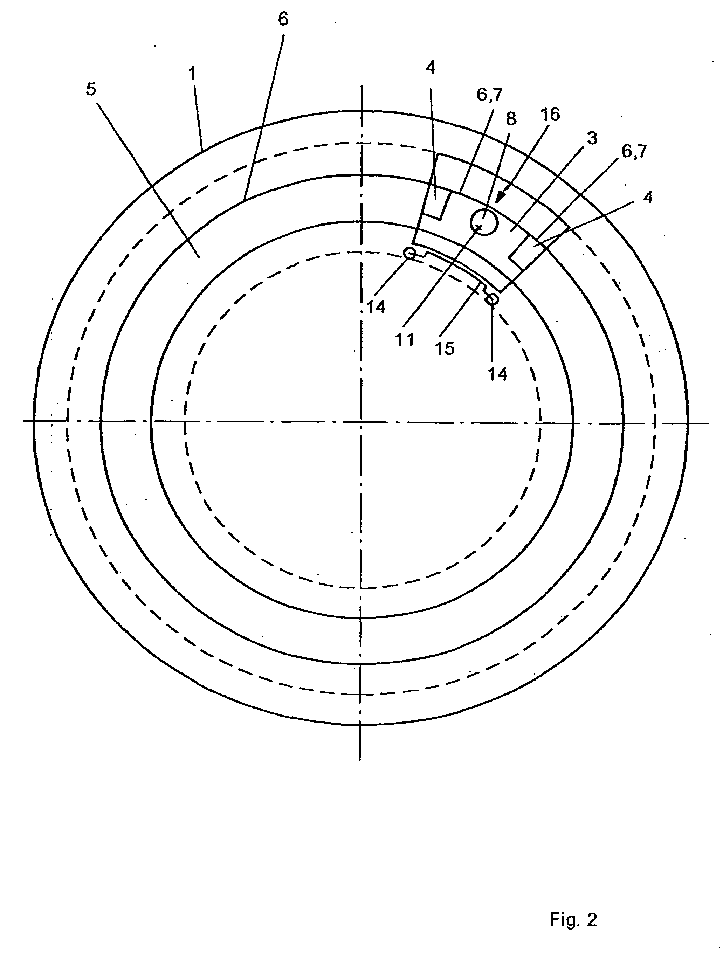

Fig. 2 zeigt eine Stirnansicht des Stirnendabschnittes gem. Fig. 1. Gleiche Bauelemente sind mit den gleichen Bezugszahlen bezeichnet wie in Fig. 1.

Ergänzend zur Fig. 1 ist der Fig. 2 zu entnehmen, daß sich das Massenelement 3 an der radial inneren Seitenwand der T-Nut 2 über eine auf Rollen 14 gelagerte Blattfeder 15 abstützt, die das Massenelement 3 radial nach außen belastet und das Massenelement 3 in Richtung der Zahnung 6 drückt. Wird das Massenelement entgegen dieser Federkraft zwangsweise aus seinem Formschluß mit der Zahnung 6 ausgerückt, und zwar in Richtung des Pfeiles 16 in der Fig. 2, so läßt sich das Massenelement 3 in der T-Nut 2 auf den Rollen 14 leicht verschieben. Diese Ausrückung in Richtung des Pfeiles 16 geschieht, wie bereits zur Fig. 1 beschrieben, durch Einführung des Dornes 9 in das Sackloch 8. Dabei ist der Eintrittspunkt des Dornes 9 in das Sackloch 8 auf der Linie 11 in Fig. 2 mit einem Kreuz markiert, woraus noch einmal der zunächst vorhandene radiale Versatz zwischen dem Dorn und dem Sackloch 8 deutlich wird. Dieser wird beim Eindringen des Dornes 9 in das Sackloch 8 unter Ausrückung des Masssenelementes aus seinem Formschluß mit der Zahnung 6 in Richtung des Pfeiles 16 vermindert bis das Massenelement zur Verschiebung in der T-Nut 2 auf den Rollen 14 freikommt.

Zur Verschiebung des Massenelementes 3 in der T-Nut 2 muß es nur von dem Dorn 9 der stationär angeordneten Erfassungseinrichtung festgehalten werden, und der Körper 1 selbst kann dann um seine Rotationsachse zu einer langsamen Drehung angetrieben werden, so daß sich also letztlich die T-Nut 2 relativ zu dem mittels des Dornes 9 fixierten Massenelement bewegt.

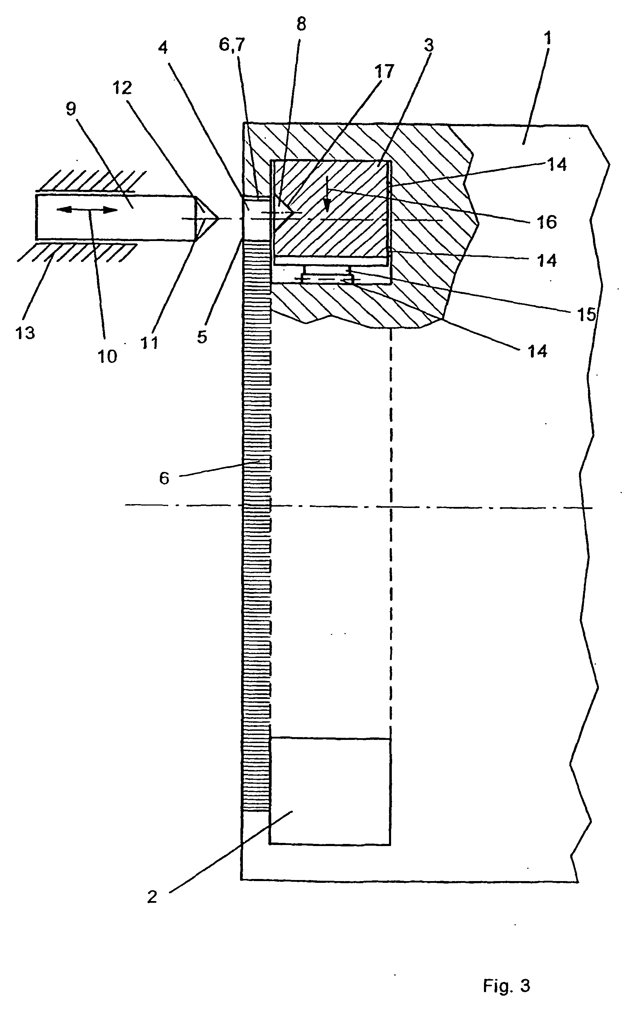

Fig. 3, in der wiederum gleiche Bauelemente mit den gleichen Bezugszahlen bezeichnet sind wie in Fig.1 und 2, zeigt einen Längsschnitt durch den Körper 1. In dieser Ansicht ist noch einmal insbesondere die Anordnung des Dornes 9 in seinem stationären Futter 13 einer Erfassungseinrichtung und seine radial versetzte Zuordnung zu dem Sackloch 8 des Massenelementes 3 zu erkennen. Auch läßt sich aus dieser Sicht die Ausrückung des Massenelementes 3 aus seinem Formschluß mit der Zahnung 6 und seine Wiedereinrückung unter der Kraft der Blattfeder 15 besser erschließen.

Des weiteren ist zu sehen, daß das Massenelement 3 auch in axialer Richtung mit Rollen 14 auf dem Boden der T-Nut 2 abgestützt ist.

Außerdem ist erkennbar, daß auch der Boden des Sackloches 8 als Konus 17, passend zu dem Konus 12 des Dornes 9, ausgebildet ist.

Es ist klar, daß in den im vorhergehenden beschriebenen Figuren nur ein Ausführungsbeispiel beschrieben ist, das im Rahmen der Erfindung in vielerlei Hinsicht abgewandelt werden könnte ohne den Bereich der Erfindung zu verlassen. Die Erfindung ist also nicht auf das in der Zeichnung dargestellte Ausführungsbeispiel beschränkt.

## Patentansprüche

1. Verfahren zum Auswuchten von rotierenden Körpern, insbesondere zum Auswuchten der Trommel (1) eines Reproduktionsgerätes, vorzugsweise eines Druckplattenbelichters, bei dem
- wenigstens ein Massenelement (3) entlang eines vorgegebenen Bewegungsweges (2), vorzugsweise eines zur Rotationsachse des rotierenden Körpers in gleichbleibendem radialen Abstand verlaufenden Bewegungsweges, umpositioniert wird, und
- das Massenetement (3) in unterschiedlichen Auswuchtungspositionen mittels Formschlusses fixiert wird,
**dadurch gekennzeichnet, dass**
(a) das Massenelement (3) für eine Bewegung entlang des Bewegungsweges (2) durch eine Erfassungsvorrichtung (9, 13) erfasst wird, und
(b) das Massenelement (3) zu seiner Fortbewegung entlang des Bewegungsweges (2) aus einem Formschlusseingriff in radialer Richtung ausgerückt und zu seiner Fixierung in einer Auswuchtungsposition in einen Formschlusseingriff in radialer Richtung eingerückt wird, indem eine Bewegung eines Erfassungsorgans (9) in zur Rotationsachse achsparalleler Richtung in eine Bewegungskomponente des Massenelementes in radialer Richtung umgesetzt wird.

2. Verfahren nach Anspruch 1, **dadurch gekennzeichnet, dass** die Bewegungskomponente des Massenelementes in radialer Richtung durch zusammenwirkende Schrägflächen erzeugt wird, die jeweils an dem Erfassungsorgan und an dem Massenelement vorhanden sind.

3. Verfahren nach Anspruch 1, **dadurch gekennzeichnet, dass** die Einrückung des Massenelementes (3) in einen Formschluss in Richtung der Fliehkraft erfolgt.

4. Verfahren nach einem der Ansprüche 1 bis 3, **dadurch gekennzeichnet, dass** das Massenelement (3) in Einrückrichtung unter einer Belastung steht.

5. Verfahren nach einem der vorhergehenden Ansprüche, **dadurch gekennzeichnet, dass** das Massenelement in einem entlang des Bewegungsweges (2) verlaufenden, gleichmäßigen Raster (6) mittels Formschluss fixierbar ist.

6. Verfahren nach einem der vorhergehenden Ansprüche, **dadurch gekennzeichnet, dass** sich für die Fixierung des Massenelementes (3) wenigstens ein fixierendes Formschlusselement (6) relativ zum Massenelement (3) bewegt.

7. Einrichtung zum Auswuchten von rotierenden Körpern, insbesondere zum Auswuchten der Trommel (1) eines Reproduktionsgerätes, vorzugsweise eines Druckplattenbelichters, bei der
- wenigstens ein Massenelement (3) entlang eines vorgegebenen Bewegungsweges (2), vorzugsweise eines zur Rotationsachse des rotierenden Körpers in gleichbleibendem radialen Abstand verlaufenden Bewegungsweges, umpositionierbar ist, und
- das Massenelement (3) in unterschiedlichen Auswuchtungspositionen mittels Formschlusses fixierbar ist,
**gekennzeichnet durch**
eine Erfassungsvorrichtung (9, 13) zur Erfassung des Massenelementes (3) für eine Bewegung entlang des Bewegungsweges (2), wobei die Erfassungsvorrichtung (9, 13) und das Massenelement (3) zusammenwirkende Schrägflächen (12, 17) aufweisen, die eine Bewegung eines Erfassungsorgans (9) in zur Rotationsachse achsparalleler Richtung in eine Bewegungskomponente des Massenelementes (3) in radialer Richtung umsetzen.

8. Einrichtung nach Anspruch 7, **dadurch gekennzeichnet, dass** das Massenelement (3) zu seiner Fortbewegung entlang des Bewegungsweges (2) aus einem Formschlusseingriff ausrückbar und zu seiner Fixierung in einer Auswuchtungsposition in einen Formschlusseingriff einrückbar ist.

9. Einrichtung nach Anspruch 7 oder 8, **dadurch gekennzeichnet, dass** F6rmschlusselemente (6) derart angeordnet sind, dass sie einen Formschlusseingriff des Massenelementes (3) jeweils in radialer Richtung zur Rotationsachse ermöglichen.

10. Einrichtung nach Anspruch 9, **dadurch gekennzeichnet, dass** die Formschlusselemente (6) jeweils in Fliehkraftrichtung angeordnet sind.

11. Einrichtung nach einem der Ansprüche 7 bis 10, **dadurch gekennzeichnet, dass** ein Belastungselement (15) zur Kraftbeaufschlagung des Massenelementes (3) in Einrückrichtung vorgesehen ist.

12. Einrichtung nach Anspruch 11, **dadurch gekennzeichnet, dass** das Belastungselement (15) eine an dem oder jedem Massenelement (3) angeordnete Feder (15) ist.

13. Einrichtung nach einem der Ansprüche 7 bis 12, **dadurch gekennzeichnet, dass** das oder jedes Massenelement (3) reibungsvermindemd mit wenigstens einem Rollelement (14) ausgestattet ist.

14. Einrichtung nach einem der Ansprüche 9 bis 13, **dadurch gekennzeichnet, dass** Formschlusselemente (6) für das Massenelement (3) eine entlang des Bewegungsweges verlaufende, gleichmäßige Rasterung (6) bilden.

15. Einrichtung nach Anspruch 14, **dadurch gekennzeichnet, dass** die Rasterung (6) eine Zahnung (6) oder eine Rändelung ist.

16. Einrichtung nach einem der Ansprüche 7 bis 15, **dadurch gekennzeichnet, dass** der Bewegungsweg (2) als eine Führungsbahn (6) für das Massenelement (3) oder die Massenelemente vorgegeben ist.

17. Einrichtung nach Anspruch 16, **dadurch gekennzeichnet, dass** die Führungsbahn (6) als Schlitzschiene ausgebildet ist.

18. Einrichtung nach Anspruch 7, **dadurch gekennzeichnet, dass** das Erfasssungsorgan (9) ein Stift oder ein Dorn (9) ist.

19. Einrichtung nach Anspruch 18, **dadurch gekennzeichnet, dass** das Erfassungsorgan (9) in ein passendes Sackloch (8) des Massenelementes (3) einführbar ist.

20. Einrichtung nach Anspruch 19, **dadurch gekennzeichnet, dass** das Erfassungsorgan (9) und das Sackloch (8) in radialer Richtung des rotierenden Körpers (1) zueinander versetzt angeordnet sind und der Versatz kleiner als der Halbmesser des Sackloches (8) gewählt ist.

21. Einrichtung nach Anspruch 19 oder 20 **dadurch gekennzeichnet, dass** die Schrägflächen des Erfassungsorgans (9) und des Sackloches (8) jeweils als Konen (12, 17) ausgebildet sind.

## Claims

1. Method of balancing rotating bodies, in particular of balancing the drum (1) of a reproduction device, preferably of a printing plate exposure device, wherein
- at least one weight element (3) is repositioned along a predetermined movement path (2), preferably a movement path extending at a uniform radial distance from the axis of rotation of the rotating body, and
- the weight element (3) is fixed in different balancing positions by form-locking engagement,
**characterized in that**
(a) the weight element (3) is engaged by an engagement device (9, 13) for movement along the movement path (2),
(b) for onward movement along the movement path (2), the weight element (3) is disengaged from the form-locking engagement and, for being fixed in a balancing position, is engaged in a form-locking engagement in the radial direction **in that** a movement of an engagement member (9) in a direction that is axially parallel with the axis of rotation is transformed into a movement component of the weight element in the radial direction.

2. Method according to claim 1,
**characterized in**
**that** the movement component of the weight element in the radial direction is created by cooperating tapers respectively provided on the engagement member and the weight element.

3. Method according to claim 1,
**characterized in**
**that** the engagement of the weight element (3) into a form-locking engagement occurs in the direction of the centrifugal force.

4. Method according to one of claims 1 to 3,
**characterized in**
**that** the weight element (3) is subject to a load in the direction of engagement.

5. Method according to one of the preceding claims,
**characterized in**
**that** the weight element is fixable by form-locking engagement in a uniform locking pattern (6) extending along the movement path (2).

6. Method according to one of the preceding claims,
**characterized in**
**that** at least one fixing form-locking element (6) moves relative to the weight element (3) in order to fix the weight element (3).

7. Device for balancing rotating bodies, in particular for balancing the drum (1) of a reproduction device, preferably a printing plate exposure device, wherein
- at least one weight element (3) is repositionable along a predetermined movement path (2), preferably extending at a uniform radial distance tot eh axis of rotation of the rotating body, and
- the weight element (3) is fixable in different balancing positions by means of a form-locking engagement,
**characterized by**
an engagement device (9, 13) for engaging the weight element (3) for a movement along the movement path (2), the engagement device (9, 13) and the weight element (3) having cooperating tapers (12, 17) for transforming the movement of an engagement member (9) in a direction axially parallel with respect to the axis of rotation into a movement component of the weight element (3) in the radial direction.

8. Device according to claim 7,
**characterized in**
**that**, for an onward movement along the movement path (2), the weight element (3) is disengageable from its form-locking engagement and is engageable to be fixed in a balancing position in a form-locking engagement.

9. Device according to claim 7 or 8,
**characterized in**
**that** form-locking elements (6) are provided such that they enable a form-locking engagement of the weight element (3) in a radial direction with respect to the axis of rotation.

10. Device according to claim 9,
**characterized in**
**that** each of the form-locking elements (6) is arranged in the direction of the centrifugal force.

11. Device according to one of claims 7 to 10,
**characterized in**
**that** a load element (15) is provided for subjecting the weight element (3) to a force in the direction of engagement.

12. Device according to claim 11,
**characterized in**
**that** the load element (15) is a spring (15) arranged on the weight element (3) or on each weight element (15).

13. Device according to one of claims 7 to 12,
**characterized in**
**that** the weight element (3) or each weight element (3) is equipped with at least one roller element (14) to reduce friction.

14. Device according to one of claims 9 to 13,
**characterized in**
**that** form-locking elements (6) for the weight element (3) form a uniform locking pattern (6) extending along the movement path.

15. Device according to claim 14,
**characterized in**
**that** the pattern (6) is a toothing (6) or a knurling.

16. Device according to one of claims 7 to 15,
**characterized in**
**that** the movement path (2) is predetermined as a guide path (6) for the weight element (3) or the weight elements.

17. Device according to claim 16,
**characterized in**
**that** the guide path (6) is a slotted rail.

18. Device according to claim 7,
**characterized in**
**that** the engagement member (9) is a pin or a mandrel (9).

19. Device according to claim 18,
**characterized in**
**that** the engagement member (9) is insertable into a corresponding blind hole (8) of the weight element (3).

20. Device according to claim 19,
**characterized in**
**that** the engagement member (9) and the blind hole (8) are offset with respect to each other in the radial direction of the rotating body (1) and that the offset is selected to be smaller than the radius of the blind hole (8).

21. Device according to claim 19 or 20,
**characterized in**
**that** the tapers of the engagement member (9) and the blind hole (8) are each formed as conical tapers (12, 17).

## Revendications

1. Procédé pour équilibrer le balourd de corps en rotation, notamment pour équilibrer le tambour (1) d'un appareil de reproduction, de préférence un système d'exposition pour plaques d'impression, procédé selon lequel,
- au moins une masselotte (3) est changée de position le long d'un parcours de mouvement (2) prescrit, de préférence un parcours de mouvement s'étendant à distance radiale constante de l'axe de rotation du corps en rotation, et
- la masselotte (3) est fixée dans différentes positions d'équilibrage de balourd, par prise par complémentarité de forme,
**caractérisé en ce que**
(a) la masselotte (3), pour un mouvement le long du parcours de mouvement (2), est saisie par un dispositif de saisie (9, 13), et
(b) la masselotte (3), pour la poursuite de son mouvement le long du parcours de mouvement (2), est extraite, en direction radiale, d'une prise par complémentarité de forme, et pour sa fixation dans une position d'équilibrage de balourd, est engagée, en direction radiale, dans une prise par complémentarité de forme, grâce au fait qu'un mouvement d'un organe de saisie (9) dans une direction d'axe parallèle à l'axe de rotation, est converti en une composante de mouvement de la masselotte dans la direction radiale.

2. Procédé selon la revendication 1, **caractérisé en ce que** la composante de mouvement de la masselotte dans la direction radiale, est engendrée par des surfaces inclinées qui interagissent mutuellement et sont respectivement prévues sur l'organe de saisie et sur la masselotte.

3. Procédé selon la revendication 1, **caractérisé en ce que** l'engagement de la masselotte (3) dans une prise par complémentarité de forme, s'effectue dans la direction de la force centrifuge.

4. Procédé selon l'une des revendications 1 à 3, **caractérisé en ce que** la masselotte (3) est soumise à une sollicitation ou une charge dans la direction de l'engagement en prise.

5. Procédé selon l'une des revendications précédentes, **caractérisé en ce que** la masselotte peut être fixée par prise par complémentarité de forme dans un réseau de crans d'enclenchement régulier (6).

6. Procédé selon l'une des revendications précédentes, **caractérisé en ce que** pour la fixation de la masselotte (3), au moins un élément de prise par complémentarité de forme (6) pour la fixation, se déplace par rapport à la masselotte (3).

7. Dispositif pour équilibrer le balourd de corps en rotation, notamment pour équilibrer le tambour (1) d'un appareil de reproduction, de préférence un système d'exposition pour plaques d'impression, dispositif dans lequel,
- au moins une masselotte (3) peut être changée de position le long d'un parcours de mouvement (2) prescrit, de préférence un parcours de mouvement s'étendant à distance radiale constante de l'axe de rotation du corps en rotation, et
- la masselotte (3) peut être fixée dans différentes positions d'équilibrage de balourd, par prise par complémentarité de forme,
**caractérisé par**
un dispositif de saisie (9, 13) destiné à saisir la masselotte (3) pour un mouvement le long d'un parcours de mouvement (2), le dispositif de saisie (9, 13) et la masselotte (3) présentant des surfaces inclinées (12, 17) interagissant mutuellement, qui convertissent un mouvement d'un organe de saisie (9) dans une direction d'axe parallèle à l'axe de rotation, en une composante de mouvement de la masselotte (3) dans la direction radiale.

8. Dispositif selon la revendication 7, **caractérisé en ce que** la masselotte (3), pour la poursuite de son mouvement le long du parcours de mouvement (2), peut être extraite d'une prise par complémentarité de forme, et pour sa fixation dans une position d'équilibrage de balourd, peut être engagée dans une prise par complémentarité de forme.

9. Dispositif selon la revendication 7 ou 8, **caractérisé en ce que** des éléments de prise par complémentarité de forme (6) sont disposés de manière à permettre chacun, une venue en prise par complémentarité de forme de la masselotte (3), dans la direction radiale par rapport à l'axe de rotation.

10. Dispositif selon la revendication 9, **caractérisé en ce que** les éléments de prise par complémentarité de forme (6) sont disposés chacun dans la direction de la force centrifuge.

11. Dispositif selon l'une des revendications 7 à 10, **caractérisé en ce qu'**il est prévu un élément de sollicitation ou de charge (15) pour solliciter la masselotte (3) par une force dans la direction de l'engagement en prise.

12. Dispositif selon la revendication 11, **caractérisé en ce que** l'élément de sollicitation (15) est un ressort (15) disposé sur la ou chaque masselotte (3).

13. Dispositif selon l'une des revendications 7 à 12, **caractérisé en ce que** la ou chaque masselotte (3) est équipée d'au moins un élément de galet de roulement (14) réduisant la friction.

14. Dispositif selon l'une des revendications 9 à 13, **caractérisé en ce que** des éléments de prise par complémentarité de forme (6) pour la masselotte (3), forment un réseau de crans d'enclenchement régulier (6) s'étendant le long du parcours de mouvement.

15. Dispositif selon la revendication 14, **caractérisé en ce que** le réseau de crans d'enclenchement régulier (6) est une denture (6) ou un moletage.

16. Dispositif selon l'une des revendications 7 à 15, **caractérisé en ce que** le parcours de mouvement (2) est prévu sous la forme d'une voie de guidage (6) pour la masselotte (3) ou les masselottes.

17. Dispositif selon la revendication 16, **caractérisé en ce que** la voie de guidage (6) est réalisée sous forme de glissière ou de rail à rainure.

18. Dispositif selon la revendication 7, **caractérisé en ce que** l'organe de saisie (9) est une cheville ou un tenon (9).

19. Dispositif selon la revendication 18, **caractérisé en ce que** l'organe de saisie (9) peut être introduit dans un trou borgne (8) adapté de la masselotte (3).

20. Dispositif selon la revendication 19, **caractérisé en ce que** l'organe de saisie (9) et le trou borgne (8) sont disposés de manière à être décalés l'un par rapport à l'autre dans la direction radiale du corps (1) en rotation, le décalage étant choisi inférieur au demi-diamètre du trou borgne (8).

21. Dispositif selon la revendication 19 ou 20, **caractérisé en ce que** les surfaces inclinées de l'organe de saisie (9) et du trou borgne (8) sont réalisées respectivement sous la forme de cônes (12, 17).
